(19) **Europäisches Patentamt / European Patent Office / Office européen des brevets**

(11) **EP 4 679 730 A1**

(12) # EUROPEAN PATENT APPLICATION

(43) Date of publication:
**14.01.2026 Bulletin 2026/03**

(21) Application number: **25189154.5**

(22) Date of filing: **11.07.2025**

(51) International Patent Classification (IPC):
***H04B 7/185*** (2006.01)

(52) Cooperative Patent Classification (CPC):
**H04B 7/18508**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.07.2024 US 202418771904**

(71) Applicant: **Panasonic Avionics Corporation**
**Irvine, CA 92612 (US)**

(72) Inventors:
• **NGUYEN, Anh**
**Irvine, 92612 (US)**

• **KESWANI, Ritesh**
**Irvine, 92612 (US)**
• **MORO, Evandro Pioli**
**Irvine, 92612 (US)**
• **MIAO, Leon**
**Irvine, 92612 (US)**
• **SALIM, Ahmad Suhail**
**Irvine, 92612 (US)**
• **BARNETT, Matthew**
**Irvine, 92612 (US)**

(74) Representative: **Barker Brettell LLP**
**100 Hagley Road**
**Edgbaston**
**Birmingham B16 8QQ (GB)**

(54) **MULTI-ORBIT NETWORK ASSIGNMENT TECHNIQUES FOR COMMERCIAL PASSENGER VEHICLE**

(57)    A method for managing a network assignment for a commercial passenger vehicle is provided. The method comprises: detecting, at a first time, a triggering event related to wireless communication services provided to passengers in the commercial passenger vehicle; receiving network parameters indicative of historical characteristics of the wireless communication services provided by satellite networks and a cellular network; applying a machine learning algorithm that processes the network parameters and generates output parameters indicative of estimated characteristics of the wireless communication services provided by the satellite networks and the cellular network; and selecting, based on the output parameters, in response to the triggering event, a network for use by the commercial passenger vehicle for providing the wireless communication service at a second time after the first time.

Network Assignment Strategy 2

FIG. 7

**Description**

CROSS-REFERENCE TO RELATED APPLICATIONS

This application claims the benefit of priority to U.S. Non-Provisional Patent Application No. 18/771,904, titled "MULTI-ORBIT NETWORK ASSIGNMENT TECHNIQUES FOR COMMERCIAL PASSENGER VEHICLE," and filed July 12, 2024. The content of the foregoing application is incorporated herein in its entirety by reference.

TECHNICAL FIELD

This document is generally related to systems, methods, and apparatus to improve passenger experiences for passengers in commercial passenger vehicles such as airplanes, passenger trains, buses, cruise ships, and other forms of transportation.

BACKGROUND

Commercial travel has evolved with the increasing popularity of personal electronic devices (PEDs) that passengers carry on board, as well as media play devices provided in commercial passenger vehicles. Techniques that provide passengers in commercial passenger vehicles access to a large variety of entertainment content with minimal or no disruption will enhance a positive travel experience.

SUMMARY

This patent document describes, among other things, various implementations for assigning optimal networks for commercial passenger vehicles.

In one aspect, a method for managing a network assignment for a commercial passenger vehicle is provided. The method comprises: detecting, at a first time, a triggering event related to wireless communication services provided to passengers in the commercial passenger vehicle; receiving network parameters indicative of historical characteristics of the wireless communication services provided by satellite networks and a cellular network; applying a machine learning algorithm that processes the network parameters and generates output parameters indicative of estimated characteristics of the wireless communication services provided by the satellite networks and the cellular network; and selecting, based on the output parameters, in response to the triggering event, a network for use by the commercial passenger vehicle for providing the wireless communication service at a second time after the first time.

In another aspect, A system for managing a network assignment for a commercial passenger vehicle, comprising: a storage configured to store travel information of a current travel and a past travel by the commercial passenger vehicle that is configured to provide wireless communication services for passengers in the commercial passenger vehicle during a trip; and a server disposed outside the commercial passenger vehicle and in communication with the storage and the commercial passenger vehicle; and wherein the server is configured to select a network for the commercial passenger vehicle based on 1) an estimated network demand of the commercial passenger vehicle, the estimated network demand calculated based on the travel information and 2) estimated capacities of satellite networks and a cellular network, and wherein the server is further configured to detect, at a first time, a triggering event related to wireless communication services provided to passengers in the commercial passenger vehicle; receive network parameters indicative of historical characteristics of the wireless communication services provided by the satellite networks and the cellular network, apply a machine learning algorithm that processes the network parameters and generate output parameters indicative of estimated characteristics of the wireless communication services, and select, based on the output parameters, in response to the triggering event, a network for use by the commercial passenger vehicle for providing the wireless communication services at a second time after the first time.

In another aspect, a computer readable medium is provided. The computer readable medium stores instructions, upon execution by a processor, causing the processor to implement a method as suggested in this patent document.

The above and other aspects and their implementations are described in greater detail in the drawings, the description, and the claims.

BRIEF DESCRIPTION OF THE DRAWINGS

FIG. 1 shows an example of an in-flight entertainment (IFE) system installed in an airplane based on some implementations of the disclosed technology.

FIG. 2 shows an example of a configuration including a network assignment system based on some implementations of the disclosed technology.

FIG. 3 shows an example of a network assignment system in communication with commercial passenger vehicles based on some implementations of the disclosed technology.

FIG. 4 shows an example of a block diagram of a network assignment system based on some implementations of the disclosed technology.

FIG. 5A illustrates an example of a supply function for network $i$ and cell $j$ ($S_{ij}(t)$) according to time based on some implementations of the disclosed technology.

FIG. 5B illustrates an example of a demand function for aircraft $k$ and cell $j$ ($D_{kj}(t)$) according to time based on some implementations of the disclosed technology.

FIG. 5C illustrates an example of a machine learning algorithm employed by a network assignment system based on some implementations of the disclosed technology.

FIGS. 6-8 illustrate example algorithms showing a network selection for an airplane based on some implementations of the disclosed technology.

FIG. 9 illustrates an example of a screen showing networks selected for airplanes based on some implementations of the disclosed technology.

FIG. 10 shows an example of a method for managing a network assignment for a commercial passenger vehicle based on some implementations of the disclosed technology.

DETAILED DESCRIPTION

The IFC (In-flight Connectivity) markets have been going through major changes, which directly impact an end customer inflight experience, airliners offering and differentiation, service provider, and satellite network provider. Some of the changes are linked to the emergence of Low Earth Orbit (LEO) satellite networks. When compared to Geostationary Earth Satellite (GEO), LEO network offers higher transmission rate and low latency, which may translate to superior user experience that is closer to the experience at home. The IFC services for passengers in commercial passenger vehicles are available via multiple resources.

In addition to the changes in the global connectivity services, with recent advances in wireless technologies, digital video, computer and display technologies, a great number of entertainment options are being offered to passengers traveling in a commercial vehicle. For example, unlike the past when a passenger was not provided with wireless connection services onboard during travel, onboard wireless connection services are available in many commercial vehicles so that passengers can share their trips on social media and business travelers can use their flight time more productively. While the commercial passenger vehicle is provided with limited resources to support wireless connectivity for the passengers, as more passengers use wireless connection services in the commercial passenger vehicle and there are more wireless devices carried by the passengers, for example, PEDs, other ancillary wireless devices, undesired circumstances can be caused. For example, unsuccessful connection issues and degradation issues of video streaming qualities due to network congestion and unavailable slots can result in poor signal qualities, which negatively affects passenger experiences for the travel and productivity and connection capabilities during travel.

In recognition of the issues above and to offer more reliable IFC services, various implementations of the disclosed technology provide network assignment techniques for commercial passenger vehicles. The technical solutions described in the present document can be embodied in implementations to improve passenger experiences among other features by providing improved techniques for managing network assignments for commercial passenger vehicles. With various examples of the disclosed technology, it is possible to assign an optimal network for a commercial passenger vehicle in a hybrid network system including multiple satellite networks and a cellular network. By assigning the optimal network for the commercial passenger network, it is possible to provide in-flight entertainment services during travel in a more reliable and efficient manner, which can increase passenger experience while they stay in the commercial passenger vehicle.

Various implementations will be discussed in detail with reference to the figures below. In the description, an airplane is described as an example of the passenger vehicle, but the implementations of the disclosed technology can be applicable to other passenger vehicles such as buses, trains, ships, and other types of commercial passenger vehicles.

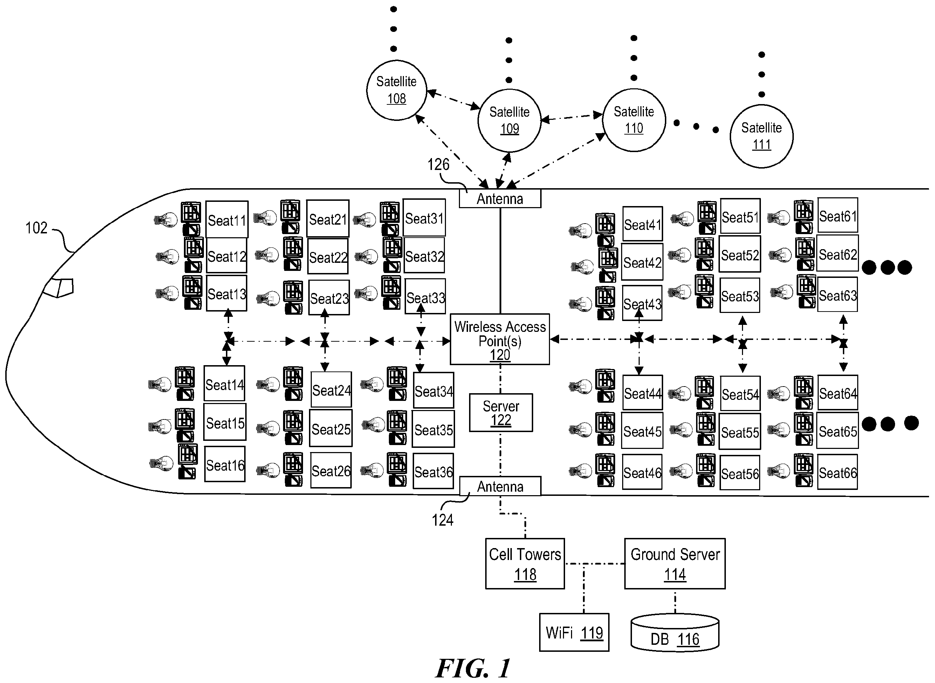

FIG. 1 shows an example of an in-flight entertainment (IFE) system for passengers in a commercial passenger vehicle such as an airplane. The example diagram of the in-flight system as shown in FIG. 1 is provided to explain how wireless connections are supported in the airplane 102. The components shown as a single element in FIG. 1, e.g., the server 122, the database 116, the wireless access point 120, etc. can be configured in multiple elements. For example, the in-flight service system can include multiple wireless access points to facilitate or support providing of wireless coverages for the passengers.

The IFE system provides various entertainment and connectivity services to passengers on board. Referring to FIG. 1, the IFE system includes a server 122, antenna 126, and antenna 124. The passengers carry their own devices, which include the PEDs (illustrated by the light bulb icon in FIG. 1) and other wireless electronic devices. The PEDs may refer to any electronic computing device that includes one or more processors or circuitries for implementing the functions related to data storage, video and audio streaming, wired communications, wireless communications, etc. The examples of the PEDs include cellular phones, smart phones, tablet computers, laptop computers, and other portable computing devices. In the implementations of the disclosed technology, the PEDs may have the capability to execute application software programs ("apps") to perform various functions.

In FIG. 1, the airplane 102 is depicted to include multiple passenger seats, Seat11 to Seat 66. The example diagram as shown in FIG. 1 shows the economy seats only but different types of passenger seats (e.g., premium economy class, premium class, first class, etc.) can be further provided in the airplane 102. The media playback devices (illustrated by screen icon) are provided at each passenger seat and configured with capabilities for video and audio streaming, Internet communications, and other capabilities. In some implementations, the media playback devices are provided at each passenger seat, such as located at each of the seatbacks of the passenger seats, and/or on cabin walls and/or deployable from an armrest for seats located at a bulkhead (i.e., in the first row of a section). The media playback devices have displays providing interfaces to each passenger through which each passenger enters their selections on the entertainment option, for example, a selection to watch a video program, a selection of a particular video program to watch, etc. The media playback devices can also allow each passenger to enter the selections of wireless network option, emergency requests, etc. To facilitate communications with the passengers, various graphic user interface (GUI) functions can be suggested and displayed on the media playback devices.

In some implementations, the media playback devices, the server 122, and the PEDs may be in communication through wired connections or wireless connections. In some implementations, the communication among the server 122, the media playback devices, and the PEDs are achieved through the antenna 124 to and from the ground-based cell towers 118 by, for example, a provision of network plugs at the seat for plugging PEDs to a wired onboard local area network. In some other implementations, the communications among the server 122, the media playback devices, and the PEDs are achieved through the antenna 126 to and from satellites 108, 109, 110, 111 in an orbit (e.g., via a cellular network utilizing one or more onboard base station(s), Wi-Fi utilizing the wireless access point 120, and/or Bluetooth). For example, the wireless network utilizing the wireless module of the media playback devices, and/or the wireless access point 120 can be formed among the server 122, the media playback devices, and the PEDs and allow the communication therebetween.

The server 122 is communicably coupled with media playback devices and the PEDs and configured to perform various operations including processing requests/inputs from passengers and providing data to passengers. In some implementations, the server 122 may communicate with other systems, for example, the ground server 114, the database 116, and the gate terminal (not shown), which are located outside of the airplane 102. The server 122 can communicate with the systems on ground such as the ground server 114, the database 116, and the gate terminal via the antenna 124 for receiving and transmitting information from/to the other systems. As further discussed later in this patent document, in the implementations of the disclosed technology, the ground server 114 operates to control the network assignment so that the passengers in the airplane can be connected to wireless services through the optimized network.

In some examples, cell towers 118 communicate or interface with the antenna 124 of the airplane 102, such that ground systems such as the ground server 114, the database 116, and the gate terminal can transmit and receive data with the server 122 and other in-vehicle systems. In some implementations, Wi-Fi element 119 provides a wireless local area network (WLAN) to allow the server 122 to communicate with the ground systems. Thus, the cell tower 118 and the Wi-Fi element 119 may act as communication nodes between the antenna 124 of the airplane 102 and the ground systems such as the ground server 114, the databases 116, and the ground terminal. In some implementations, the server 122 implements a router for the wireless onboard networks and various functionality disclosed herein to provide video streaming services for passengers in the airplane 102. The gate terminal can be implemented as a computing device and operate to maximize efficiency and safety of passenger transfers and aircraft servicing. The ground server 114 and the gate terminal may be in communication with the database 116 and provide information from the database 116 to the server 122 and store information received from the server 122 in the database 116. Although FIG. 1 shows that the database 116 is provided separately from the ground server 114, the database 116 can be provided as a part of the ground server 114.

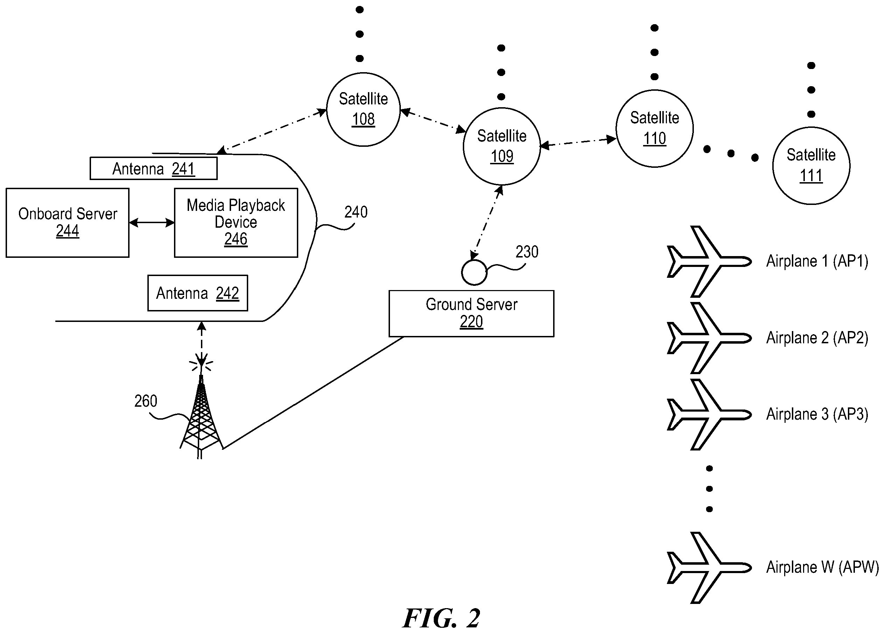

FIG. 2 shows an example of a configuration including a network assignment system based on some implementations of the disclosed technology. In the example system of FIG. 2, some elements of the aircraft 240 are shown, which include antennas 241 and 242, a media playback device 246, and an onboard server 244 in communication with the media playback device 246. The aircraft 240 is in communication with a ground server 220 through antennas 241 and 242 via one or more satellites 108, 109, 110, and 111 and/or a terrestrial communication station 260. The terrestrial communication station 260 is configured to provide cellular network for the aircraft 240. In the example, one or more satellites 108, 109, 110, and 111 are configured to provide satellite networks and include GEO (Geostationary Equatorial Orbit) satellites and/ LEO (Low Earth Orbit) satellites.

GEO satellites appear to be motionless in the sky, providing the satellite with a continuous view of a given area on the surface of the Earth. Such an orbit can only be obtained by placing the satellite directly above the Earth's equator (0° latitude), with a period equal to the Earth's rotational period. LEO satellites are placed in circular orbits at low altitudes of less than 2,000 km. A constellation of LEO satellites can provide continuous world-wide coverages, but this requires many satellites as each one is over a given region for a relatively small amount of time. Because of their relative lower distance to the Earth, latency, the delay caused by the distance a signal must travel, is far less than all other orbits. While the LEO satellite and the GEO satellite are described, those satellites are examples only and the satellite network can include other satellites without being limited to LEO satellite and the GEO satellite. The number of different types of satellites, which provides wireless connection services for the aircraft 240, can be varied as well.

The antennas 241 and 242 maybe sized and shaped to fit within the space specified by the relevant standard. For communication with geostationary satellites and providing a satisfactory communication experience for passengers on the aircraft 240, the antenna needs to satisfy certain characters related to antenna performance. For example, G/T is a factor typically used for characterizing antenna performance, where G is the antenna gain in decibels in a receive frequency band, and T is the equivalent noise temperature in Kelvins. For example, the antennas 241 and 242 may be configured to provide a certain range of G/T depending on area features during a travel of the aircraft 240. The G/T values are simply provided as examples and are not to be construed as limiting the various adaptive aspects described herein. In some implementations, a ground server antenna 230 can be provided to provide the connected network among the ground server 220, the aircraft 240, and the satellites 108, 109, 110, and 111. The ground server antenna 230 is the example only and other implementations are also possible. In some implementations, a wireless router such as an Internet modem can be configured to support the communication between the ground server 220 and the aircraft 240. In some implementations, a teleport can be configured to support the communication between the ground server 220 and the satellites 108, 109, 110, and 111.

In the implementations of the disclosed technology, the ground server 220, which in communication with the aircraft 240, the satellites 108, 109, 110, and 111, and the terrestrial communication station 260, is configured to control the network assignment for the aircraft 240. The ground server 220 can be configured to use a wide variety of resources including compute resources, storage resources, and other resources and control the network assignment using various algorithms. The ground server 220 establishes the communication connections with the satellites 108, 109, 110, 111 via a teleport (not shown). The ground server 220 can receive real time data from the satellites 108, 109, 110, 111 and the terrestrial communication station 260. As discussed later in this patent document, such real time data can be utilized for predicting data to assign a network for the aircraft. In addition, the multiple airplanes, Airplane 1 (AP1), Airplane 2 (AP2), Airplane 3 (AP3) ... Airplane W (APW), are illustrated. Although some description above is provided for a single airplane in this document, one those skilled in the art can understand that such description can be applied to the multiple airplanes. Thus, the ground server 220 can control the network assignment for the multiple airplanes.

The ground server 220 can be configured in hardware, software, or any combination thereof. In some implementations, the ground server 220 can be configured in a cloud. In this case, the cloud platform for controlling the video streaming services exists with servers, processes, and databases, which are able to be connected connect over a wide area network, such as the Internet, from multiple computing devices and then the backend of the cloud platform is configured to control the network assignment, by dynamically calling in additional computing hardware machines to load on and run the independent processes as needed.

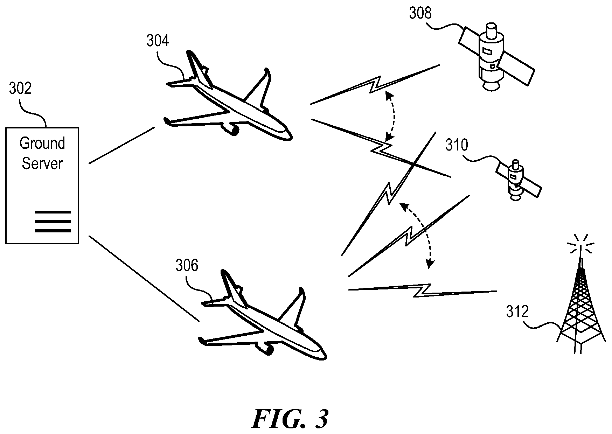

FIG. 3 shows an example of a network assignment system in communication with commercial passenger vehicles based on some implementations of the disclosed technology.

In the example of FIG. 3, the network assignment system is implemented as a ground server 302 operable to control network assignments for commercial passenger vehicles. The network assignment system is in communication with an airplane 304 which is flying in the air and an airplane 306 which is on the ground.

In the implementations, the network assignment system applies a machine learning algorithm to predict network parameters of the satellite networks and cellular network and selects an optimal network for the airplanes 304 and 306 based on the predicted network parameters. Referring to FIG. 3, the airplane 304 in the air is in communication with at least one of a GEO satellite 308 and a LEO satellite 310, and the airplane 306 on the ground is in communication with at least one of the GEO satellite 308, the LEO satellite 310, and the cellular network 312. In some implementations, for the airplane 304 which is flying the in the air, the network assignment system may select either the LEO satellite or the GEO satellite as the optimal network. In some implementations, for the airplane 306 which is on the ground, the network assignment system may select one of the GEO satellite 308, the LEO satellite 310, and the cellular network 312 as the optimal network.

In the implementations of the disclosed technology, the network assignment system provides the selection of the optimal network for the airplane at predetermined times, for example, when the airplane is powered on or when the airplane experiences a connection loss longer than a predetermined period. Thus, in some implementations, the powering-on of the airplane or expiring certain time from the powering-on of the airplane can be the event to trigger the network assignment system operating to start the selection of the optimal network for the airplane. Various triggering events can be preset and upon detecting any one of the triggering events, the network assignment system starts the operations to select the optimal network for the airplane. The network assignment system can provide the selection of the optimal network directly to the airplane or indirectly through another server. In response to receiving the selection of the optimal network, the airplane compares the optimal network as selected by the network assignment system and the current network to which the airplane is currently connected and can switch to the selected network if the optimal network is different from the current network based on a predetermined set of specified criteria. For example, the airplane may not switch to the selected network even if the optimal network selected by the network assignment system is different from the current network when the switching is not worth due to, for example, the balancing of the quality of the current network against the break in service due to the switching. Thus, in some implementations, the predetermined set of specified criteria for the airplane to switch the selected network may include, e.g., the distance between the airplane and the selected network, the expected service break time due to switching, the degradation of service due to switching, etc. Some of the network system which includes cellular network, the LEO satellite, the GEO satellite, GEO system may be divided into cells which correspond to different physical layers and each cell may include one or single beams defined as a geographical coverage area. In some implementations, the network assignment system can provide the selection of the optimal network for the airplane with a desired beam/cell information determined based on the geographical coverage areas of beams/cells and the location of the airplane.

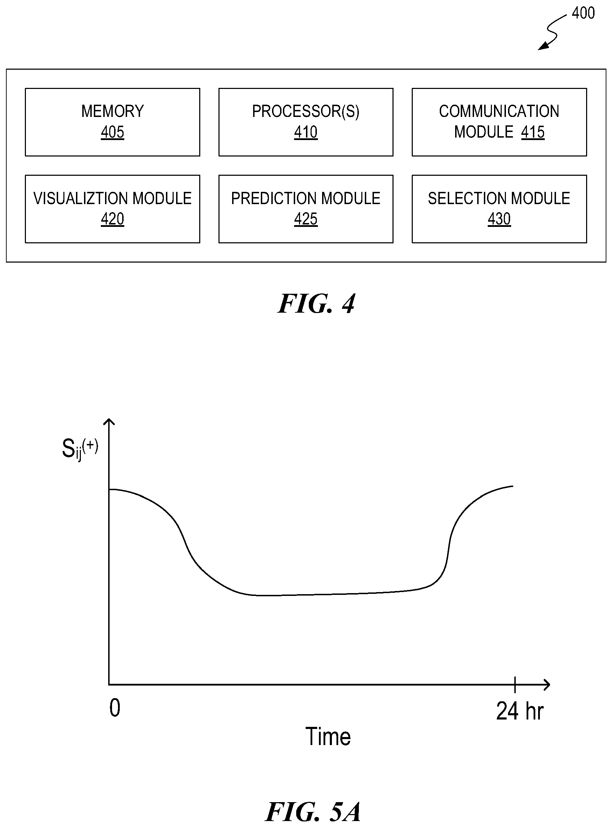

FIG. 4 shows an example of a block diagram of a network assignment system based on some implementations of the disclosed technology. The block diagram as shown in FIG. 4 can be applied to the ground server 302 as shown in FIG. 3. Referring to FIG. 4, the network assignment system 400 includes a memory 405, a processor 410, a communication module 415, a visualization module 420, a prediction module 425, and a selection module 430. In other embodiments, additional, fewer, and/or different elements may be used to configure the network assignment system. While FIG. 4 shows the processor 410, the prediction module 425 and the selection module 430 as separate elements, in some implementations, the processor 410, the prediction module 425 and the selection module 430 can be implemented as one element. In this case, the prediction module 425 and the selection module 430 can be configured as a part of the processor 410.

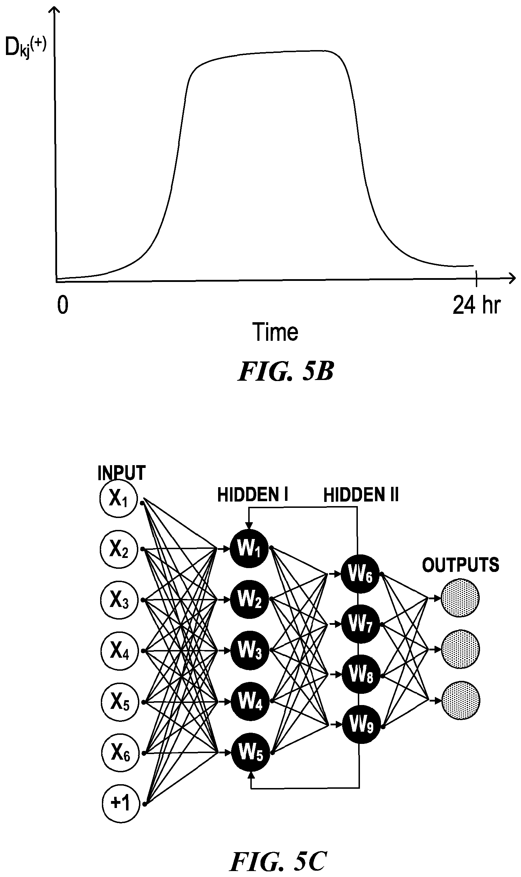

In the implementations, the prediction module 425 is configured to employ machine learning/artificial intelligence (AI) algorithms to perform operations to predict data. The machine learning/AI algorithms employed by the prediction module 425 perform various types of data analysis to automate analytical model building. Using algorithms that iteratively learn from data, machine learning applications can enable computers to learn without being explicitly programmed. The machine learning/AI algorithms use data learning algorithms to build models to interpret various data received from the various devices or components to detect, classify, and/or predict future outcomes. Such data learning algorithms may be associated with rule learning, artificial neural networks, inductive logic programming, and/or clustering. In some implementations, the machine learning/AI algorithms may enable the prediction module [] to perceive their environment and take actions that maximize their prediction results for providing predicted data and select the optimized network for airplanes. The machine learning/AI algorithms may compile coded descriptions into lower-level structured data objects that a machine can more readily understand, build a network topology of the main problem concept and sub-concepts covering aspects of the problem to be solved, train codified instantiations of the sub-concepts and main concept, and execute a trained AI model containing one, two, or more neural networks. The machine learning/AI algorithms can abstract away and automate the low-level mechanics of AI, and the machine learning/AI algorithms can manage and automate much of the lower-level complexities of working with AI. Each program developed in a pedagogical programming language can be fed into the machine learning/AI algorithms in order to generate and train appropriate intelligence models. The machine learning/AI algorithms can be a cloud-hosted platform configured to manage complexities inherent to training AI networks. Thus, the machine learning/AI algorithms can be accessible with one or more client-side interfaces to allow third parties to submit a description of a problem in a pedagogical programming language and let the online AI engine build and generate a trained intelligence model for one or more of the third parties. Thus, the machine learning/AI algorithms can be accessible with one or more client-side interfaces to allow third parties to submit a description of a problem in a pedagogical programming language and let the online AI engine build and generate a trained intelligence model for one or more of the third parties. The examples of the machine learning algorithms employed by the prediction module 425 will be further discussed later in this patent document with reference to FIG. 5C.

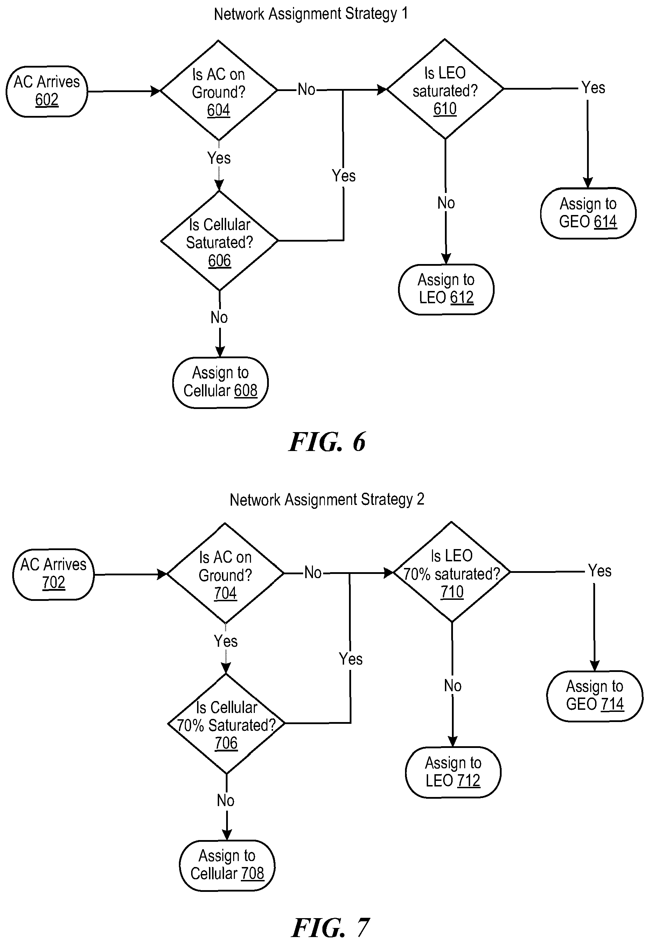

The selection module 430 is configured to select, based on the predicted data, an optimal network for a corresponding airplane from the hybrid network system including the multiple satellite networks and the cellular network. The selection module 430 stores predetermined algorithms to select the network based on the predicted data and communicates with the corresponding airplane to provide information of the selected network. For example, the network assignment system 400 may receive various information of the corresponding airplane and the hybrid network system and apply the predetermined selection algorithm to select the network based on the predicted data. In some implementations, the selection module 430 is configured to select the network in response to receiving a request for the selection. In some implementation, the selection module 430 is configured to select the network when the predetermined conditions triggering the selection of the network is satisfied. The predetermined conditions can be set based on time, the location of the airplane, the usage of wireless connection services in the airplane, the number of airplanes covered by a corresponding network, or others. For example, the selection module 430 may be configured to select the network for the airplane which is scheduled to depart within a certain period of time, or when the airplane is powered up. For example, the selection module 430 may be configured to select the network for the airplane when the airplane crosses the geographical boundary of the corresponding network. In some implementations, the selection module 430 may repeat the selection of the network for the airplane after making the first selection of the network. In some implementation, the reselection of the network can be performed regularly. In some implementations, the reselection of the network can be performed based on the geographical locations of the airplane. In some implementations, the reselection of the network can be performed when the usage of the wireless connection services in the airplane is greater than the predetermined usage. The examples of the algorithms employed by the selection module 430 will be further discussed later in this patent document with reference to FIGS. 6-8.

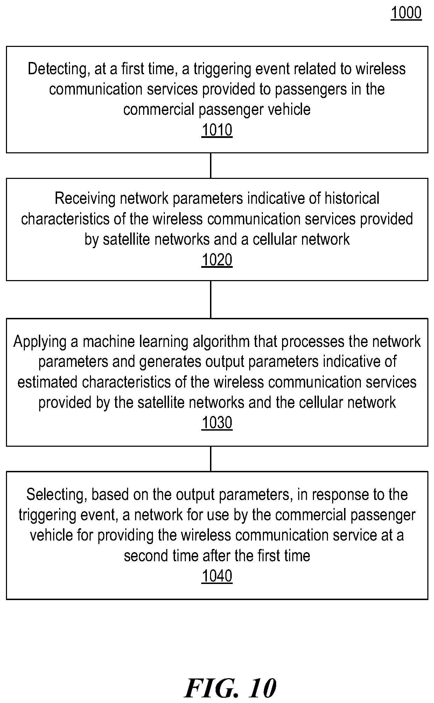

The memory 405 is an electronic holding place or storage for information or instructions so that the information or instructions can be accessed by the other elements of the network assignment system 400, which include processor 410, the prediction module 425, the selection module 430, etc. The memory 405 can include, but is not limited to, any type of random access memory (RAM), any type of read only memory (ROM), any type of flash memory, etc. Such as magnetic storage devices (e.g., hard disk, floppy disk, magnetic strips, etc.), optical disks (e.g., compact disk (CD), digital versatile discs (DVD), etc.), smart cards, flash memory devices, etc. The instructions upon execution by the processor 410 configure the network assignment system to perform the operations (e.g., the operations, for example, as shown in FIG. 10) which will be described in this patent document. The instructions executed by the processor 410 may be carried out by a special purpose computer, logic circuits, or hardware circuits.

The processor 410 may be implemented in hardware, firmware, software, or any combination thereof. The term "execution" is, for example, the process of running an application or the carrying out of the operation called for by an instruction. The instructions may be written using one or more programming language, scripting language, assembly language, etc. By executing the instruction, the processor 410 can perform the operations called for by that instruction. The processor 410 operably couples with the memory 405, the communication module 415, the visualization module 420, the prediction module 425, and the selection module 430 to receive, to send, and to process information and to control the operations of the ground server 1100. The processor 410 may retrieve a set of instructions from a permanent memory device such as a ROM device and copy the instructions in an executable form to a temporary memory device that is generally some form of RAM. In some implementations, the ground server 1100 can include a plurality of processors that use the same or a different processing technology.

The network assignment system further includes the communication module 415 to communicate with the airplanes to receive information related to the airplanes and provide the information of the selected network. The communication module 415 further allows the network assignment system to communicate with the hybrid network system including multiple satellite networks and the cellular network. While the communication module 415 is implemented as a single element, the communication module can be implemented as two separate elements, e.g., a transmitter and a receiver. In some implementations, the communication module 415 may be in communication with various servers/platforms that operate as sources of various data that is related to a travel by a commercial passenger vehicle and provide any related information such as weather reports, fleet information, aircraft information, etc. Such data can be inputted as the input data of the prediction module 425 and the selection module 430 and utilized to perform the prediction and the selection of the network.

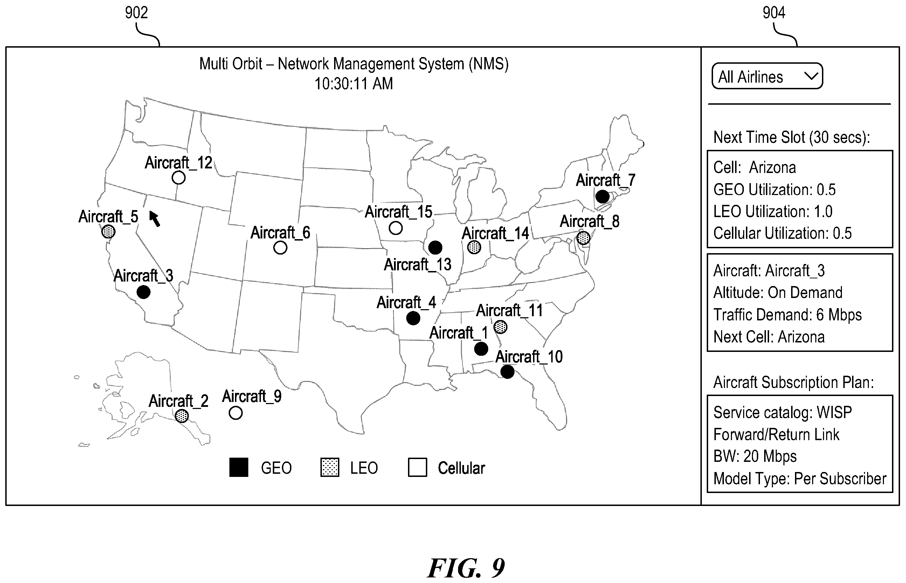

In some implementations, the visualization module 420 is configured to visualize the optimal networks selected for airplanes. In some implementations, the visualization module 420 can display various data including the selected networks for airplanes. Data visualization is generally understood to refer to processing and presenting data to a user by displaying the data as one or more visual objects. Various visual objects may include a map, a chart, a graph, a search tab, an information panel, a timeline, a diagram, etc. The visualization module 420 can utilize many resources and tools that are available for producing computer-generated visualizations of data. For example, the visualization module 420 can access open-source visualization libraries that include instructions/codes for rendering the visualizations of data. In some implementations, the visualization module 420 allow a user to modify the visual representation of certain data. The example of the visualization by the visualization module 420 will be further discussed later in this document with reference to FIG. 9.

FIG. 5C illustrates an example of a machine learning algorithm employed by a network assignment system based on some implementations of the disclosed technology. For example, the machine learning algorithm as shown in FIG. 5C may be applied to the prediction module of the ground server as shown in FIG. 4.

In some implementations, the network assignment system may sequentially test network loading using the machine learning models according to a static priority which suggests prioritizing the network in the order of 1) cellular, 2) LEO, 3) GEO for the airplane on the ground and prioritizing the LEO over GEO for the airplane in the air. While the static priority may be considered as one factor to determine the optimal network for the airplane, the network assignment system can further consider at least one of the current network's load, the airplane's demand, or the capacity of the network to select the network for the airplane. In some implementations, the network assignment system may assign the network according to the static priority of the network if the current network's load plus the airplane's demand is below the capacity of the network and the network assignment system may assign the network for the airplane independently from the static priority of the network if the current network's load plus the airplane's demand is not below the capacity of the network. For example, the network assignment system can select the LEO instead of cellular as the optimal network for the airplane on the ground based on the algorithms. For example, the network assignment system can select the GEO instead of LEO for the airplane in the air based on the algorithms.

In some implementations, the network assignment system assigns the network for the airplane as a function of estimated aircraft network demand and estimated network capacity at decision time. FIG. 5A illustrates an example of a supply function for network $i$ and cell $j$ ($S_{ij}(t)$) according to time. FIG. 5B illustrates an example of a demand function for airplane k and cell j ($D_{kj}(t)$) according to time. In some implementations, the network assignment system determines the capacity (i.e., supply) of network i and cell j ($S_{ij}$) at time t (t is from 00:00 to 24:00) by analyzing the LAN-to-air interface packet queue occupancy. For example, the sample average queue occupancy is 200ms or more, then network cell capacity is established. In some implementations, the demand of airplane k and cell j ($D_{kj}$) at time t (t is from 00:00 to 24:00) by accounting of forward traffic (ground-to-air) when average queue occupancy is small (e.g., < 200 msec). The airplane demand, $D_{kj}(t)$, is continuously updated by taking sample average of valid demand samples for the same k, j, and t. Samples may be valid only when queue occupancy is small. Implementing congestion control (linear increase, exponential decrease), cell capacity, $S_{ij}(t)$, is increased by a certain number, for example, 2%, if the last queue occupancy sample was small, decreased by $2^n$ % if the last n samples was not small. The machine learning models can be created using a recurring neural network, by collecting historical and current data and making predictions for the KPIs of interest:

In some implementations, the network assignment system assigns the network for the airplane as a function of estimated aircraft network demand and estimated network capacity at decision time. For example, the estimated aircraft network demand is calculated using weighted sample average of historical demand at its current time of day and location. For example, the estimated network capacity is determined by applying the machine learning algorithms. The one example of the machine learning algorithm may include the exponential backoff and linear increase to estimate the network's capacity. Such specific algorithm is the example only and other various machine learning algorithm may be used to estimate the capacity of the network. Referring to FIG. 5C, the machine learning algorithm collects data as input data and provide predicted data as output data. The examples of the input data collected by the machine learning algorithm and the output data predicted by the machine learning algorithm include at least one of the following:

- GPS, geolocation
- RSSI (Received Signal Strength Indicator): This refers to a measurement of the overall signal strength, including the desired signal from the cell tower and any interference or noise.,
- RSRP (Reference Signal Received Power): This refers to a measurement of the power received from a specific reference signal sent by the cell tower.
- RSRQ (Reference Signal Received Quality): This metric goes beyond the strength and considers the overall quality of the signal. It takes into account the strength of the reference signal compared to the surrounding noise and interference.
- FWD (Forward) bandwidth: This refers to the bandwidth available for data flowing from the network to the airplane.
- RTN (Return) bandwidth: This refers to the bandwidth available for data flowing from the airplane back to the network.
- TCP retransmission status: This refers to a status related to TCP retransmissions.
- Packet out of order status: This refers to a status related to packet reordering.
- Buffer usage status: This refers to a status related to usage of buffer.
- Download speeds: This refers to rate for receiving data.
- Upload speeds: This refers to rate for sending data.
- Latency: This refers to delay in transmitting data.
- Jitter: This refers to variation in latency in transmitting data.
- Target bit rate: This refers to a desired average bit rate.
- Average bit rate: This refers to an actual average bit rate.
- Maximum bit rate: This refers to a maximum bit rate.
- Minimum bit rate: This refers to a minimum bit rate.
- Downlink error/packet loss rate: This refers to rate of data packets lost during transmission from network.
- Uplink error/packet loss rate: This refers to rate of data packets that fail to be transmitted successfully toward network.

The input data and the output data as provided above are examples only and other implementations are also possible without being limited to those as listed above. Thus, any other network parameters related to network performance information can be used as the input/output data of the machine learning algorithm. The input data provided to the machine learning algorithm may correspond to historical data collected for each of the satellite networks and the cellular networks, e.g., the LEO satellite, the GEO satellite, and the cellular network. In some implementations, the network assignment system in communication with the airplane, the LEO satellite, the GEO satellite, and the cellular network receives data in real time from at least one of the airplane, the LEO satellite, the GEO satellite, or the cellular network and such data can be provided as the input data of the machine learning algorithm. The network assignment system can be further in communication any other resources to receive additional real time data to provide more reliable and accurate predicted results. For example, the real time data received by the network assignment system may include the current network parameters of the LEO satellite, the GEO satellite, and/or the cellular network, the number of airplanes in the air, the number of airplanes on the ground, the number of passengers in the airplane, the amount of wireless data usage in an airplane, or any other information that can affect network performance. The network assignment system uses both of historical data (which is not real-time data) and real-time data as input data for the machine learning algorithm to provide more accurate predicted output data.

In some implementations, the machine learning algorithm gives one or more sets of weights (e.g., W1, W2, W3, W4, W5, etc.) for each input in one or more hidden layers. In the example as shown in FIG. 5C, the first set of weights, W1, W2, W3, W4, and W5, is applied to the inputs in the first hidden layer and the second set of weights, W6, W7, W8, and W9, is applied to the inputs in the second hidden layer. While two hidden layers are shown in FIG. 5C as the example, the number of hidden layers is not limited two. In some implementations, using a technique called time series forecasting, the network assignment system collects a series of data from the network options regularly and creates a model to capture the patterns, trends, and dependencies within the series aiming at making future predictions of the data. In some implementations, at least some of the predicted data can be used as the key performance indicators (KPIs). For example, the network assignment system provides the download speeds, the upload speeds, and latency as the KPIs. In some implementations, the machine learning algorithm predict the KPIs of interests for any given point of time.

In some implementations, the network assignment system continuously trains and improves the models for each airport and flying locations using the machine learning algorithms. In the implementations, the machine learning algorithm trains the model with time series data observed over successive time intervals for various locations so that the model can deliver precise predictions. By continuously training and improving the models, it is possible to provide more accurate predictions, which can improve the passenger experience by influencing the satellite network scheduling and planning. In some implementations, by predicting the network behaviors for various networks, it is possible to predict the KPIs before the network shows symptoms of latency, jitter, packet loss, packet our of order, retransmission behaviors, etc. In some implementations, by noticing such parameter changes, the maximum capacity can be tuned, which will guide the decision of adding additional tail or not.

FIGS. 6-8 illustrate example algorithms showing a network selection for an airplane based on some implementations of the disclosed technology. For example, the algorithms as shown in FIGS. 6-8 may be applied to the selection module of the ground server as shown in FIG. 2.

Referring to FIG. 6, at the operation 602, the network assignment system is notified of the arrival of an airplane at a certain position. In some implementations, the notification of the arrival of the airplane may include information of the certain position. In some implementations, the certain position may be one of predetermined locations and the network assignment system can figure out the location information of the airplane when receiving the notification of the arrival of the airplane at the certain position. At the operation 604, it is determined whether the airplane is on the ground or not. If it is determined on the ground, the network assignment system determines, at the operation 606, whether the cellular network is saturated. The determination whether the network is saturated can be made in various manners. For example, the determination that the saturation occurs is made based on the utilization parameter, which is obtained by dividing "Offered Load" by "Service Capacity." The parameters, "Offered Load" and "Service Capacity," can be obtained by the network assignment system. For example, "Offered Load" refers to the total amount of demand for IFC and can be obtained by communicating with the airplanes. For example, "Service Capacity" refers to the maximum availability of IFC provided by each network and can be obtained by the network assignment system based on the predicted outputs of the prediction module.

In some implementations, when the utilization satisfies the following equation, it is determined that the corresponding network is saturated.

$$\text{Utilization} = \frac{\text{Offered Load}}{\text{Service Capacity}} = 1$$

In some implementations, the network assignment system can calculate expected latency per network type, e.g., GEO satellite, LEO satellite, and cellular network, and model the world as a non-overlapping grid. The airplanes become active, dwell in the multi-orbit system, then become inactive. In the example, the airplane has a probabilistic traffic profile, and each network has a probabilistic capacity profile. Within each cell, each network is modeled as an M/G/1 queue, and the latency depends on average packet size and expected utilization. In some implementations, the GEO's propagation delay is ~600 ms which is higher than LEO's propagation delay. The LEO's packet latency is lower than GEO's packet latency until LEO utilization is 0.9999.

If it is determined that the cellular network is not saturated, e.g., when the utilization parameter is not equal to 1, at the operation 608, the network assignment system assigns the airplane the cellular network. If it is determined that the cellular network is saturated, it is determined at the operation 610 whether the LEO network is saturated. If it is determined that the LEO network is not saturated, the network assignment system assigns the airplane the LEO network at the operation 612. If it is determined that the LEO network is saturated, the network assignment system assigns the airplane the GEO network at the operation 614.

FIG. 7 illustrate an example algorithm showing a network selection for an airplane based on some implementations of the disclosed technology. Unlike the example as shown in FIG. 6, in the example as shown in FIG. 7, the determination at the operations 706 and 710 are made to check whether the corresponding network is 70% saturated or not. For example, it is determined that the corresponding network is 70% saturated when the utilization parameter is 0.7.

Referring to FIG. 7, at the operation 702, the network assignment system is notified of the arrival of an airplane at a certain position. In some implementations, the notification of the arrival of the airplane may include information of the certain position. In some implementations, the certain position may be one of predetermined locations and the network assignment system can figure out the location information of the airplane when receiving the notification of the arrival of the airplane at the certain position. At the operation 704, it is determined whether the airplane is on the ground or not. If it is determined on the ground, the network assignment system determines, at the operation 706, whether the cellular network is 70% saturated. As discussed above, in the example, the determination that the network is 70% saturated can be made when the utilization parameter is 0.7.

If it is determined that the cellular network is not 70% saturated, e.g., when the utilization parameter is not equal to 0.7, at the operation 708, the network assignment system assigns the airplane the cellular network. If it is determined that the cellular network is 70% saturated, it is determined at the operation 710 whether the LEO network is saturated. If it is determined that the LEO network is not 70% saturated, the network assignment system assigns the airplane the LEO network at the operation 712. If it is determined that the LEO network is saturated, the network assignment system assigns the airplane the GEO network at the operation 714.

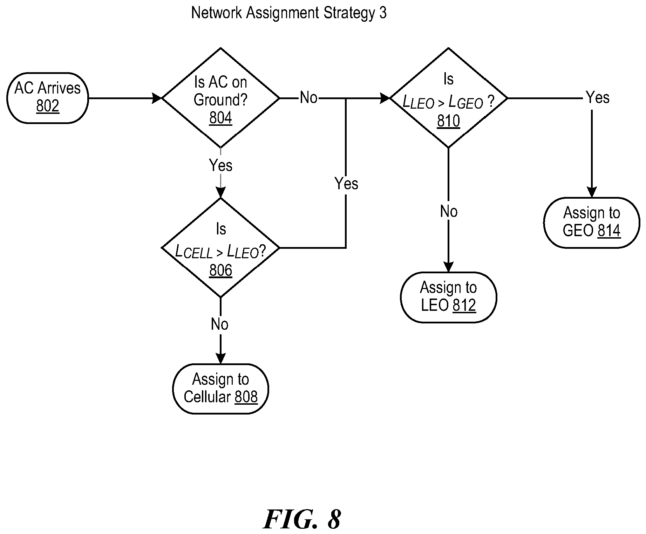

FIG. 8 illustrate an example algorithm showing a network selection for an airplane based on some implementations of the disclosed technology.

Referring to FIG. 8, at the operation 802, the network assignment system is notified of the arrival of an airplane at a certain position. In some implementations, the notification of the arrival of the airplane may include information of the certain position. In some implementations, the certain position may be one of predetermined locations and the network assignment system can figure out the location information of the airplane when receiving the notification of the arrival of the airplane at the certain position. At the operation 804, it is determined whether the airplane is on the ground or not. If it is determined on the ground, the network assignment system determines, at the operation 806, whether $L_{CELL}$ is greater than $L_{LEO}$. $L_{CELL}$, $L_{LEO}$, and $L_{GEO}$ refer to the expected packet latency when the airplane is assigned to the cellular network, the LEO satellite, the GEO satellite, respectively. $L_{CELL}$, $L_{LEO}$, and $L_{GEO}$ can be obtained by the network assignment based on the predicted outputs of the prediction module.

If it is determined that $L_{CELL}$ is not greater than $L_{LEO}$, at the operation 808, the network assignment system assigns the airplane the cellular network. If it is determined that $L_{CELL}$ is greater than $L_{LEO}$, it is determined at the operation 810 whether $L_{LEO}$ is greater than $L_{GEO}$. If it is determined that $L_{LEO}$ is not greater than $L_{GEO}$, the network assignment system assigns the airplane the LEO network at the operation 812. If it is determined $L_{LEO}$ is greater than $L_{GEO}$, the network assignment system assigns the airplane the GEO network at the operation 814.

In the examples with reference to FIGS. 6-8, it has been described that the predetermined algorithms run upon the arrival of the airplane at the certain position. In this case, the arrival of the airplane at the certain position becomes the event triggering the network selection algorithm to run. In some implementations, other triggering events can be predetermined, and the network selection algorithms run when any predetermined triggering event is satisfied. In some other implementations, the network selection system can regularly run the algorithms to check the statuses (e.g., saturation statuses and/or any other network performance related statuses) of the cellular network, the LEO satellite, and the GEO satellite, and make the selection of the network based on the results of the checking of the statuses. In some implementations, the network selection system receives the location information of the airplane and run the network selection algorithm based on the location of the airplane (e.g., when the airplane crosses the geographical boundary of the corresponding network). While FIGS. 6-8 show that selection algorithm makes the selection of the network based on the saturation status or the latency, the selection algorithm can be designed to consider multiple network parameters without being limited to the saturation status and the latency. For example, the selection algorithm can select the network for the airplane based on both the saturation status and the latency. In some other implementations, the selection algorithm can select the network for the airplane based on the saturation status, the latency, and the additional network parameter. When the selection algorithm selects the network for the airplane based on multiple network parameters, the selection algorithm can give different weights for the respective parameters. Those skilled in the art can understand that various modification can be made to the selection algorithm to optimize the selection of the network for the airplane.

FIG. 9 illustrates an example of a screen showing networks selected for airplanes based on some implementations of the disclosed technology. The screen 902 as shown in FIG. 9 may be provided by the visualization module in FIG. 4. In the screen 902, the selected networks for corresponding airplanes are displayed in a map. In the example, the visualization module of the network assignment system renders the map to include the visualized items corresponding to the selected networks of the airplanes, which allows a user looking at the screen 902 to quickly figure out the assigned networks for the airplanes. For example, the GEO network is selected for Aircrafts 1, 3, 4, 7, 10, and 13, the LEO network is selected for Aircrafts 5, 8, and 14, and the cellular network is selected for Aircrafts 6, 12, and 15. On the right of the screen 902, the screen provides the information panel 904 providing additional information. For example, the information panel 904 may show information of the GEO utilization, the LEO utilization, the cellular utilization for the next time slot (e.g., 30 seconds). In some implementation, the information panel 901 may provide the information such as altitude, traffic demand, next cell information for the particular aircraft in response to clicking the icon corresponding to the particular craft. In some implementations, the information related to the aircraft subscription plan may be provided, which includes wireless service provider (WISP) information, forward/return link, bandwidth, and/or model type. The information provided on the screen 902 can be modified in various manners and the layouts/designs of the screen are varied as well without being limited to the example as shown in FIG. 9.

Various implementations of the disclosed technology apply the machine learning algorithms to predict network parameters for airplanes and select optimal networks for the airplanes. By suggesting recommendations for the network selections based on the predicted data related to the network performances of various networks, it is possible to improve the passenger experience and/or efficiency of the network resources.

Various techniques preferably incorporated within some embodiments may be described using the following solution-based format.

1. A method (e.g., method 1000 as shown in FIG. 10) for managing a network assignment for a commercial passenger vehicle, comprising: detecting 1010, at a first time, a triggering event related to wireless communication services provided to passengers in the commercial passenger vehicle; receiving 1020 network parameters indicative of historical characteristics of the wireless communication services provided by satellite networks and a cellular network; applying 1030 a machine learning algorithm that processes the network parameters and generates output parameters indicative of estimated characteristics of the wireless communication services provided by the satellite networks and the cellular network; and selecting 1040, based on the output parameters, in response to the triggering event, a network for use by the commercial passenger vehicle for providing the wireless communication service at a second time after the first time.

2. The method of solution 1, wherein the applying of the machine learning algorithm includes: providing a set of weights for the network parameters in one or more layers, wherein the network parameters include at least one of geolocation, signal strength information, transmission status, packet reordering status, buffer usage status, speed information for data transfer, bandwidth information, or other network performance information of a corresponding network.

3. The method of solution 1, wherein the applying of the machine learning algorithm includes: receiving real time data from at least one of the satellite networks, the cellular network, or the commercial passenger vehicle, wherein the machine learning algorithm generates the output parameters based on the real time data.

4. The method of solution 1, wherein the satellite networks include a Geostationary Earth Satellite (GEO) network and a Low Earth Orbit (LEO) network, and wherein the selecting of the network includes making a first determination whether the commercial passenger vehicle is on a ground or flying in an air.

5. The method of solution 4, wherein in response to the first determination determining that the commercial passenger vehicle is on the ground, the selecting of the network further includes making a second determination whether the cellular network is saturated or not.

6. The method of solution 5, wherein the second determination whether the cellular network is saturated or not is based on a utilization that indicates a ratio obtained by dividing a demand for wireless connection services in the commercial passenger vehicle by a capacity of a corresponding network.

7. The method of solution 4, wherein in response to the first determination determining that the commercial passenger vehicle is not on the ground, the selecting of the network further includes making a second determination whether the LEO network is saturated or not.

8. The method of solution 4, wherein in response to the first determination determining that the commercial passenger vehicle is on the ground, the selecting of the network further includes comparing an expected packet latency of the cellular network is greater than an expected packet latency of the LEO network.

9. The method of solution 4, wherein in response to the first determination determining that the commercial passenger vehicle is not on the ground, the selecting of the network further includes comparing an expected packet latency of the LEO network is greater than an expected packet latency of the GEO network.

10. The method of solution 1, further comprising: calculating an estimated network demand of the commercial passenger vehicle by using a weighted sample average of past demands of the commercial passenger vehicle, and wherein the network is selected further based on the estimated network demand.

11. A system for managing a network assignment for a commercial passenger vehicle, comprising: a storage configured to store travel information of a current travel and a past travel by the commercial passenger vehicle that is configured to provide wireless communication services for passengers in the commercial passenger vehicle during a trip; and a server disposed outside the commercial passenger vehicle and in communication with the storage and the commercial passenger vehicle; and wherein the server is configured to select a network for the commercial passenger vehicle based on 1) an estimated network demand of the commercial passenger vehicle, the estimated network demand calculated based on the travel information and 2) estimated capacities of satellite networks and a cellular network, and wherein the server is further configured to detect, at a first time, a triggering event related to wireless communication services provided to passengers in the commercial passenger vehicle; receive network parameters indicative of historical characteristics of the wireless communication services provided by the satellite networks and the cellular network, apply a machine learning algorithm that processes the network parameters and generate output parameters indicative of estimated characteristics of the wireless communication services, and select, based on the output parameters, in response to the triggering event, a network for use by the commercial passenger vehicle for providing the wireless communication services at a second time after the first time.

12. The system of solution 11, wherein the server is further configured to provide a set of weights for the network parameters in one or more layers, wherein the network parameters include at least one of geolocation, signal strength information, transmission status, packet reordering status, buffer usage status, speed information for data transfer, bandwidth information, or other network performance information of a corresponding network.

13. The system of solution 11, wherein the server is further configured to receive real time data from at least one of the satellite networks, the cellular network, or the commercial passenger vehicle, wherein the machine learning algorithm generates the output parameters based on the real time data.

14. The system of solution 11, wherein the server is configured to calculate an estimated network demand of the commercial passenger vehicle and select the network based on the estimated network demand and estimated capacities of the satellite networks and the cellular network.

15. The system of solution 11, wherein the satellite networks include a GEO network and a LEO network, and

wherein the server is further configured to make a first determination whether the commercial passenger vehicle is on a ground or flying in an air.

16. The system of solution 15, wherein in response to the first determination determining that the commercial passenger vehicle is on the ground, the server is further configured to make a second determination whether the cellular network is saturated or not.

17. The system of solution 15, wherein in response to the first determination determining that the commercial passenger vehicle is not on the ground, the server is further configured to make a second determination whether the LEO network is saturated or not.

18. The system of solution 15, wherein in response to the first determination determining that the commercial passenger vehicle is on the ground, the server is further configured to compare an expected packet latency of the cellular network is greater than an expected packet latency of the LEO network.

19. The system of solution 15, wherein in response to the first determination determining that the commercial passenger vehicle is not on the ground, the server is further configured to compare an expected packet latency of the LEO network is greater than an expected packet latency of the GEO network.

20. The system of solution 11, wherein the server is further configured to select the network for the commercial passenger vehicle based on at least two different output parameters by giving different weights to the output parameters.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware, or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described, and other implementations, enhancements and variations can be made based on what is described and illustrated in this patent document.

## Claims

1. A method for managing a network assignment for a commercial passenger vehicle, comprising:

   detecting, at a first time, a triggering event related to wireless communication services provided to passengers in the commercial passenger vehicle;
   receiving network parameters indicative of historical characteristics of the wireless communication services provided by satellite networks and a cellular network;
   applying a machine learning algorithm that processes the network parameters and generates output parameters indicative of estimated characteristics of the wireless communication services provided by the satellite networks and the cellular network; and
   selecting, based on the output parameters, in response to the triggering event, a network for use by the commercial passenger vehicle for providing the wireless communication services at a second time after the first time.

2. The method of claim 1, wherein the applying of the machine learning algorithm includes:
   providing a set of weights for the network parameters in one or more layers, wherein the network parameters include at least one of geolocation, signal strength information, transmission status, packet reordering status, buffer usage status, speed information for data transfer, bandwidth information, or other network performance information of a corresponding network.

3. The method of claim 1, wherein the applying of the machine learning algorithm includes:
   receiving real time data from at least one of the satellite networks, the cellular network, or the commercial passenger vehicle, wherein the machine learning algorithm generates the output parameters based on the real time data.

4. The method of claim 1, wherein the satellite networks include a Geostationary Earth Satellite (GEO) network and a Low Earth Orbit (LEO) network, and wherein the selecting of the network includes making a first determination whether the commercial passenger vehicle is on a ground or flying in an air.

5. The method of claim 4,
   wherein in response to the first determination determining that the commercial passenger vehicle is on the ground, the selecting of the network further includes i) making a second determination whether the cellular network is saturated or not, or ii) comparing an expected packet latency of the cellular network is greater than an expected packet latency of the LEO network.

**6.** The method of claim 5,
wherein the second determination whether the cellular network is saturated or not is based on a utilization that indicates a ratio obtained by dividing a demand for wireless connection services in the commercial passenger vehicle by a capacity of a corresponding network.

**7.** The method of claim 4,
wherein in response to the first determination determining that the commercial passenger vehicle is not on the ground, the selecting of the network further includes i) making a second determination whether the LEO network is saturated or not, or ii) comparing an expected packet latency of the LEO network is greater than an expected packet latency of the GEO network.

**8.** The method of claim 1, further comprising:

calculating an estimated network demand of the commercial passenger vehicle by using a weighted sample average of past demands of the commercial passenger vehicle, and
wherein the network is selected further based on the estimated network demand.

**9.** A system for managing a network assignment for a commercial passenger vehicle, comprising:

a storage configured to store travel information of a current travel and a past travel by the commercial passenger vehicle that is configured to provide wireless communication services for passengers in the commercial passenger vehicle during a trip; and
a server disposed outside the commercial passenger vehicle and in communication with the storage and the commercial passenger vehicle; and
wherein the server is configured to select a network for the commercial passenger vehicle based on 1) an estimated network demand of the commercial passenger vehicle, the estimated network demand calculated based on the travel information and 2) estimated capacities of satellite networks and a cellular network, and
wherein the server is further configured to detect, at a first time, a triggering event related to wireless communication services provided to passengers in the commercial passenger vehicle; receive network parameters indicative of historical characteristics of the wireless communication services provided by the satellite networks and the cellular network, apply a machine learning algorithm that processes the network parameters and generate output parameters indicative of estimated characteristics of the wireless communication services, and select, based on the output parameters, in response to the triggering event, a network for use by the commercial passenger vehicle for providing the wireless communication services at a second time after the first time.

**10.** The system of claim 9, wherein the server is further configured to provide a set of weights for the network parameters in one or more layers, wherein the network parameters include at least one of geolocation, signal strength information, transmission status, packet reordering status, buffer usage status, speed information for data transfer, bandwidth information, or other network performance information of a corresponding network.

**11.** The system of claim 9,
wherein the server is further configured to receive real time data from at least one of the satellite networks, the cellular network, or the commercial passenger vehicle, wherein the machine learning algorithm generates the output parameters based on the real time data.

**12.** The system of claim 9,

wherein the server is configured to calculate an estimated network demand of the commercial passenger vehicle and select the network based on the estimated network demand and estimated capacities of the satellite networks and the cellular network, or
wherein the server is further configured to select the network for the commercial passenger vehicle based on at least two different output parameters by giving different weights to the output parameters.

**13.** The system of claim 9, wherein the satellite networks include a GEO network and a LEO network, and wherein the server is further configured to make a first determination whether the commercial passenger vehicle is on a ground or flying in an air.

**14.** The system of claim 13,
wherein in response to the first determination determining that the commercial passenger vehicle is on the ground, the server is further configured to: i) make a second determination whether the cellular network is saturated or not, or ii) compare an expected packet latency of the cellular network is greater than an expected packet latency of the LEO network.

**15.** The system of claim 13,
wherein in response to the first determination determining that the commercial passenger vehicle is not on the ground, the server is further configured to: i) make a second determination whether the LEO network is saturated or not, or ii) compare an expected packet latency of the LEO network is greater than an expected packet latency of the GEO network

*FIG. 1*

Satellite 111

Satellite 110

Satellite 109

Satellite 108

Airplane 1 (AP1)

Airplane 2 (AP2)

Airplane 3 (AP3)

Airplane W (APW)

230

Ground Server 220

240

Antenna 241

Media Playback Device 246

Onboard Server 244

Antenna 242

260

*FIG. 2*

FIG. 3

400

| MEMORY | PROCESSOR(S) | COMMUNICATION |
|:---:|:---:|:---:|
| 405 | 410 | MODULE 415 |

| VISUALIZTION MODULE | PREDICTION MODULE | SELECTION MODULE |
|:---:|:---:|:---:|
| 420 | 425 | 430 |

*FIG. 4*

$S_{ij}^{(+)}$

0          24 hr

Time

*FIG. 5A*

*FIG. 5B*

*FIG. 5C*

Network Assignment Strategy 1

**FIG. 6**

Network Assignment Strategy 2

**FIG. 7**

Network Assignment Strategy 3

AC Arrives
802

Is AC on
Ground?
804

—No—

Yes

Is
$L_{CELL} > L_{LEO}$?
806

—Yes—

No

Assign to
Cellular 808

Is
$L_{LEO} > L_{GEO}$ ?
810

—Yes—

No

Assign to
LEO 812

Assign to
GEO 814

*FIG. 8*

**FIG. 9**

EP 4 679 730 A1

1000

Detecting, at a first time, a triggering event related to wireless communication services provided to passengers in the commercial passenger vehicle
1010

Receiving network parameters indicative of historical characteristics of the wireless communication services provided by satellite networks and a cellular network
1020

Applying a machine learning algorithm that processes the network parameters and generates output parameters indicative of estimated characteristics of the wireless communication services provided by the satellite networks and the cellular network
1030

Selecting, based on the output parameters, in response to the triggering event, a network for use by the commercial passenger vehicle for providing the wireless communication service at a second time after the first time
1040

*FIG. 10*

Europäisches
Patentamt

European
Patent Office

Office européen
des brevets

## EUROPEAN SEARCH REPORT

**Application Number**

EP 25 18 9154

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LUONG DOANH KIM ET AL: "Deep Learning approach for the Multilink Selection Problem in Avionic Networks", 2020 AIAA/IEEE 39TH DIGITAL AVIONICS SYSTEMS CONFERENCE (DASC), IEEE, 11 October 2020 (2020-10-11), pages 1-5, XP033858807, DOI: 10.1109/DASC50938.2020.9256728 [retrieved on 2020-11-10] | 1-3,8-11 | INV. H04B7/185 |
| Y | * Section I * | 4,12,13 | |
| A | * Section II * * Section III * | 5-7,14, 15 | |
| Y | US 2012/236784 A1 (LYNCH MICHAEL J [US] ET AL) 20 September 2012 (2012-09-20) | 4,13 | |
| A | * paragraph [0044] * * paragraphs [0060] - [0062] * * paragraph [0071] * * paragraphs [0096], [0099] * * figures 1, 2, 3, 4, 7 * | 1-3, 5-12,14, 15 | |
| Y | BILEN TUGCE ET AL: "A Proof of Concept on Digital Twin-Controlled WiFi Core Network Selection for In-Flight Connectivity", IEEE COMMUNICATIONS STANDARDS MAGAZINE, IEEE, vol. 6, no. 3, 1 September 2022 (2022-09-01), pages 60-68, XP011924655, ISSN: 2471-2825, DOI: 10.1109/MCOMSTD.0001.2100103 [retrieved on 2022-10-21] | 12 | TECHNICAL FIELDS SEARCHED (IPC) H04B |
| A | * Digitial Twin Topology * * Twin Service Layer * * figures 2, 3 * | 1-11, 13-15 | |

-/--

The present search report has been drawn up for all claims

| Place of search | Date of completion of the search | Examiner |
|---|---|---|
| The Hague | 7 November 2025 | Wijting, Carl |

EPO FORM 1503 03.82 (P04C01)

page 1 of 2

| Europäisches Patentamt<br>European Patent Office<br>Office européen des brevets | **EUROPEAN SEARCH REPORT** | **Application Number**<br>EP 25 18 9154 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WAN CHENJI ET AL: "DQN-based Network Selection and Load Balancing for LEO Satellite-Terrestrial Integrated Networks",<br>2024 7TH WORLD CONFERENCE ON COMPUTING AND COMMUNICATION TECHNOLOGIES (WCCCT), IEEE,<br>12 April 2024 (2024-04-12), pages 233-238,<br>XP034613084,<br>DOI: 10.1109/WCCCT60665.2024.10541404<br>[retrieved on 2024-06-03]<br>* Section III *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 7 November 2025 | Wijting, Carl |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 9154

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2025

| Patent document cited in search report | Publication date | Patent family member(s) | Publication date |
|---|---|---|---|
| US 2012236784 A1 | 20-09-2012 | US 2008240029 A1 | 02-10-2008 |
| | | US 2008240038 A1 | 02-10-2008 |
| | | US 2008240061 A1 | 02-10-2008 |
| | | US 2008240062 A1 | 02-10-2008 |
| | | US 2012236784 A1 | 20-09-2012 |
| | | US 2012236785 A1 | 20-09-2012 |
| | | US 2012238204 A1 | 20-09-2012 |
| | | US 2012240170 A1 | 20-09-2012 |
| | | US 2013281106 A1 | 24-10-2013 |
| | | US 2015358072 A1 | 10-12-2015 |

EPO FORM P0459

For more details about this annex : see Official Journal of the European Patent Office, No. 12/82

**EP 4 679 730 A1**